# EUROPEAN PATENT SPECIFICATION

(11) **EP 0 702 612 B1**
(45) Date of publication and mention of the grant of the patent: **09.09.1998**
(21) Application number: 94918403.0
(22) Date of filing: 17.06.1994
(51) Int. Cl.: B23Q 1/26, B24B 9/10, B24B 41/053, B23Q 3/00

(54) **METHOD AND DEVICE FOR SUPPORTING A TOOL WHILE WORKING THE EDGE OFA SHEET MATERIAL**
VERFAHREN UND VORRICHTUNG ZUR UNTERSTÜTZUNG EINES WERKZEUGES WÄHREND DER BEARBEITUNG VON KANTEN EINES PLATTENFÖRMIGEN WERKSTÜCKES
PROCEDE ET DISPOSITIF PERMETTANT DE SOUTENIR UN OUTIL PENDANT L'USINAGE DU BORD D'UN MATERIAU EN FEUILLE

(30) Priority: 17.06.1993 FI 932782
(43) Date of publication of application: 27.03.1996
(73) Proprietor: Pilkington Lamino Oy, 33101 Tampere (FI)
(72) Inventor: RAUTARINTA, Timo, FIN-23800 Laitila (FI); ANTOLA, Ari, FIN-23800 Laitila (FI); LAINE, Harri, FIN-23800 Laitila (FI); VAINIO, Unto, FIN-23950 Pyhäranta (FI)
(74) Representative: Smulders, Theodorus A.H.J., Ir.
(86) International application number: FI9400272
(87) International publication number: WO9500287

(56) References cited:
- EP-A- 0 491 051
- DE-A- 2 435 042
- DE-A- 3 301 200
- DE-A- 3 531 582
- DE-A- 3 706 886
- DE-A- 3 926 532

## Description

The invention relates to a method of machining the edge of a substantially planar workpiece, such as a glass sheet, wherein in a machining center the machining of a work piece, fixed by a fixing arrangement in a stationary manner on a substantially horizontal support surface at a predetermined distance therefrom, is carried out by a tool head, fixed to at least one movable arm of a robot, and comprising a tool rotatably driven around a substantially vertical axis of rotation, the tool head being supported, in addition to the support by the robot arm, substantially in the vertical downward direction. Such a method is known from DE-A-3531582.

For the edge grinding of particularly planar pieces, such as metal plates or glass sheets, it is known to use a variety of arrangements ranging from manual sanding machines to fully automatic grinding lines. Conventionally, the edges of relatively small metal plates are chamfered manually with an abrasive disc. Particularly in glass manufacture, it is conventional to use e.g. a grinding line of several grinding devices, due to the great risk of breaking the glass. In a corresponding manner, the treatment of relatively large metal pieces requires a certain degree of automation, due to the large mass of the metal pieces.

Particularly in glass manufacture, the purpose of edge grinding is:
- to remove sharp burrs arisen in connection with removing the surrounding glass edges,
- to chamfer the glass edges so that the further treatment of the glass sheet can be carried out with bare hands and/or that the edges of the glass sheet do not wear silk excessively,
- to remove from the edge any cracks exposing the glass sheet to breaking and thus also to reinforce the semifinished product and the final product, and
- to form the edge of the glass sheet to a ground surface with a uniform appearance.

Off-hand grinding is conventionally carried out by so-called cross-belt grinding, wherein for edge grinding the glass sheet is moved usually in a horizontal plane against two crosswise moving grinding belts, wherein both the upper and lower edges of the glass sheets are being ground simultaneously. This grinding method primarily removes the burrs and chamfers the contact angles. The cracks at the edge of the glass can be removed by diamond grinding, wherein the grinding is carried out using one or several e.g. groovelike or conical abrasive discs reinforced with diamond, also grinding both contact angles simultaneously. For achieving a ground edge surface with a uniform appearance, CNC-controlled diamond grinding is still required by the current techniques.

Particularly for glass products, the quality standards have been continuously raised, wherein good edge grinding is generally required of a manufactured glass product. In practice, this means that for securing a sufficient quality of edge grinding, diamond grinding is to be used.

Applying a relatively common diamond grinding technique, conventionally four separate abrasive discs are used, one for each side. The glass sheet is thus carried in the grinding center conventionally on a horizontal conveyor arrangement, wherein it passes first between two abrasive discs opposite to each other, after which its direction of moving is usually changed to be perpendicular to the original direction, wherein the glass sheet passes, for treatment of the two opposite sides left, between another pair of abrasive discs in a corresponding way. This grinding method and the grinding devices of so-called lazy arm type applied therein involve several problems, such as:
- the grinding machine must be prepared separately for each glass type in the beginning of the series, wherein the preparation time required for a short series usually becomes excessively long,
- the abrasive discs of the grinding machine cannot follow difficult glass shapes sufficiently closely, wherein the quality of edge grinding does not fully meet the current standards, and
- the starting points of the abrasive discs cause problems, wherein part of the edge is conventionally ground twice; moreover, there is usually also excessive variation of the grinding force e.g. on curved surfaces, due to the fact that the supporting arm of the grinding machine is long in order to achieve as great an extension as possible, and thus also excessively heavy.

On the other hand, particularly from edge grinding carried out by CNC technique it is known to fix the glass piece for grinding in a stationary manner at a distance from the support surface and to grind it with a moving abrasive disc. Thus the profile of the abrasive disc to be used is usually concave, wherein it grinds the whole surface of the glass into a uniform ground surface. In applications of this type, such as known from DE-A-3531582, the abrasive disc must be positioned extremely precisely in relation to the edge to be ground, wherein a grinding device with a relatively large extension involves high manufacturing costs and a massive construction. Consequently, the application of CNC technique is excessively expensive particularly in view of the other process phases of glass manufacture. Moreover, both the programming and the small changes to be made in the short series are relatively difficult to carry out.

The purpose of the method according to this invention is to provide a decisive improvement in the disadvantages presented above and thus to improve substantially the prior art in the field. For achieving this aim, according to the invention, the above-mentioned method is characterized by supporting the tool head on the workpiece support surface by means of a fluid bearing arrangement comprising a carrier fixed to the tool head and having a bearing surface for gliding on the workpiece support surface by forming a fluid bed between the bearing surface of the carrier and the workpiece support surface.

The most important advantages of the method according to the invention include simplicity and reliability, wherein operative breaks, e.g. due to re-positioning, can also be avoided. The method according to the invention makes the optimal quality standard with regard to the edge grinding of she treated product possible in all conditions. The method according to the invention can be carried out with substantially simpler equipment than the methods currently in use, wherein also the requirement for space is substantially smaller. Applying the method according to the invention, it is possible to treat pieces of a variety of sizes and shapes with a range substantially greater than in current methods. In spite of the large extension made possible by the method, the positioning of the abrasive disc in relation to the edge to be treated is precise, wherein the large extension does not involve any load on the actual machining device.

The other dependent claims on the method disclose advantageous embodiment of the method according to the invention.

The invention relates also to an apparatus for applying the method. An apparatus as defined in the preamble of the independent claim on the apparatus is known from DE-A-3531582.

By the apparatus according to the invention, it is possible in a simple and reliable manner to achieve an optimal grinding result based on the fact that by supporting the grinding head according to the invention e.g. against the support surface supporting the piece, the precise positioning of the abrasive disc in relation to the edge to be treated is achieved for a variety of pieces to be treated. Also, the need of space for the apparatus is also substantially smaller than for present apparatuses, wherein the apparatus can be easily fitted with manufacturing processes already in use. Further, the apparatus according to the invention can be constructed to have a substantially greater extension than present apparatuses, wherein the greater extension does not, however, cause actual loading on the machining device. Consequently, the apparatus according to the invention can be used for treating a substantially larger product range than present apparatuses. In an advantageous embodiment of the invention, an application of the grinding head is also possible wherein only a grinding force perpendicular to the edge to be treated is effective from the supporting arm of the machining device on the abrasive disc or the like, preferably by using a border line preferably automatically pre-defined into the data processing unit connected with the machining device.

The dependent claims on the apparatus disclose advantageous embodiments of the device according to the invention.

In the following description, the invention is illustrated in detail with reference to the appended drawings, in which
- Figs. 1a and 1b: show an advantageous apparatus applying the method according to the invention in a perspective view and in a front view,
- Fig. 2: shows an advantageous alternative machining device used in the apparatus according to the invention,
- Fig. 3: shows the support of the glass sheet onto the support surface in a cross-section, and
- Fig. 4: shows an advantageous grinding arrangement according to the invention.

The invention relates to a method for treating the edge of a piece, such as for edge grinding or the like, which is carried out by a machining device 1 in a treatment center I in at least a data transmitting connection with a data processing unit, such as a microprocessor, an analogous circuit and/or the like. The machining device 1 comprises at least one machining means 1a, such as an abrasive disc or the like, for treating the edge of a piece 3 on a support surface 2 in a treatment center I. The treatment of the edge of the piece 3, supported on the support surface 2 in a stationary manner by a fixing arrangement 4 at least for the time of the treatment phase, is preferably carried out by a machining means 1a which is movable along the edge of the piece 3 and rotates around an axis of rotation substantially perpendicular to the plane of the piece 3 when pressed against the edge of the piece 3 to be treated. For at least facilitating the positioning of the machining means 1a in relation to the edge to be treated, the machining means 1a of the maching device 1 is supported, at least for the time of treatment of the piece 3, in a direction substantially perpendicular to the plane of the piece 3 to be treated on a preferably solid surface which is substantially parallel to the piece 3 and/or the support surface 2.

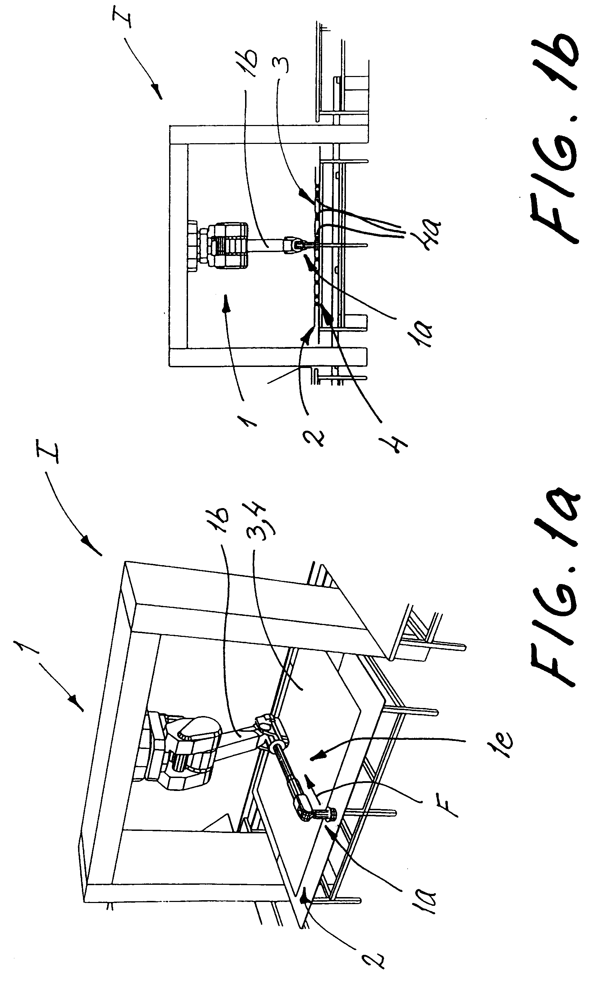

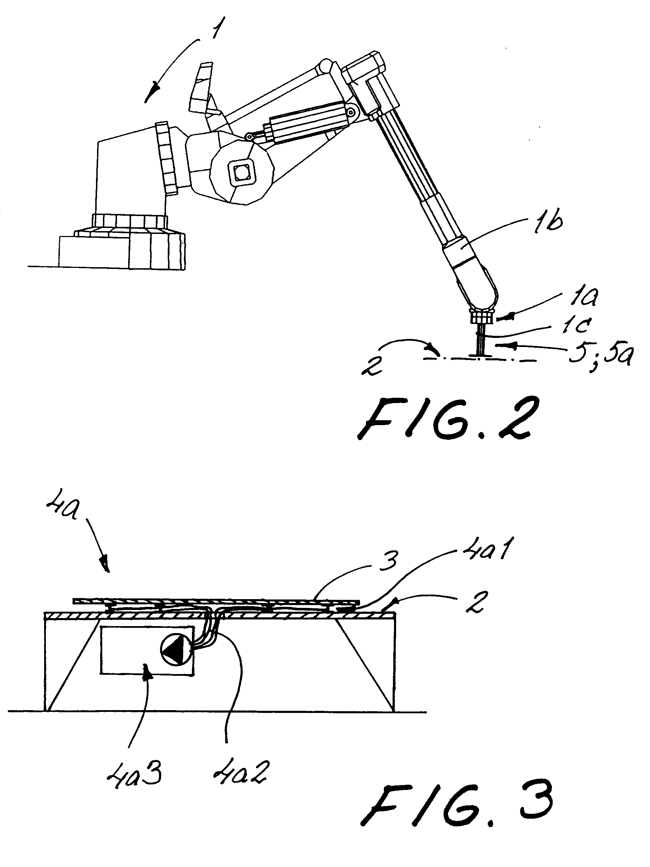

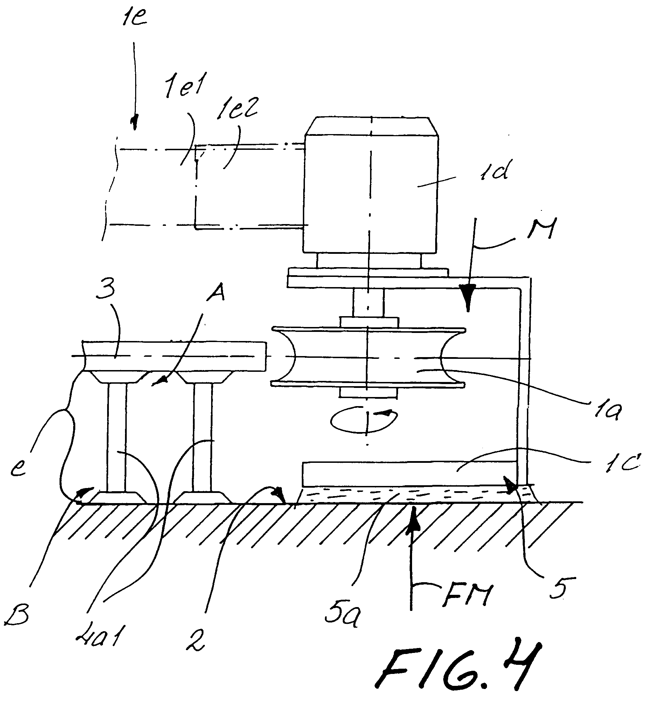

In the embodiments shown in Figs. 1a-4, the piece 3 to be treated is supported on a horizontal support surface 2 in the treatment center I. Thus the treatment of the edge of the piece 3, fixed at a distance e from the support surface 2, is carried out by an abrasive disc 1a, fixed in a movable supporting arm 1b in the machining device 1, such as in a robot as shown in Figs. 1a, 1b and 2, and revolving around a substantially vertical axis of rotation. Thus at each grinding point of the piece 3, e.g. each upper and lower corner of the edge or the whole edge can be ground simultaneously. In the embodiments shown, the abrasive disc 1a is supported in a substantially vertical direction, whereby the mass M of the grinding head is compensated by a supporting force FM generated with a fluid bed 5a and directed from the support surface 2 at the location of the grinding head, as shown in Fig. 4. The supporting arm 1b of the robot 1 is thus used preferably by means of a constant power arrangement 1e primarily for transmission of a force effecting solely the movement of the abrasive disc 1a on the support surface 2.

With particular reference to Fig. 1a, the abrasive disc 1a is pressed by preferably adjustable power means 1e2 against the edge to be treated, for directing the grinding force f at the edge substantially in the plane of the piece 3 to be treated. In this connection, with reference also to Fig. 4, the grinding force f of the abrasive disc 1a effected preferably by power means 1e2 of the power arrangement 1e is directed using the external form, such as the border line, of the piece 3 to be treated, preferably defined in advance into the data processing unit, wherein the grinding force f is continuously directed at the edge to be treated, in a substantially perpendicular direction to the edge, such as the tangent of the border line or the like.

Further with reference to Fig. 4, it is advantageous in the method to use in the treatment of the edge a grinding fluid m, such as water, oil and/or the like, which is led at least to the grinding point of the edge to be treated. Thus in an advantageous embodiment of the method, the grinding fluid m is used as the carrier medium of the medium arrangement 5 that supports the abrasive disc 1a on the support surface 2 functioning as the contact surface, the grinding fluid m being led between a carrier surface 1c connected with the abrasive disc 1a and the support surface 2, for forming a fluid bed 5a. Thus the grinding fluid m to be fed in connection with grinding onto the support surface 2 runs e.g. from the edges of the support surface to collecting flutes, from which the fluid is led further through a purifier to be used again. After the work stage, it is advantageous to clean the support surface e.g. by using water and by drying.

As presented above, the grinding head and the support surface 2 are mounted on bearings in relation to each other by a so-called hydrodynamic bearing system. Thus in an advantageous embodiment, the grinding fluid m is led through a supporting arm connected with the abrasive disc 1a underneath the carrier surface 1c, wherein by the action of the fluid bed 5a formed, the grinding head glides upon the fluid bed 5a with a height of preferably about 0.15 mm. The function of the grinding head is thus made to have as little friction and to be as insensitive to impurities as possible. Furthermore, the flowing grinding fluid removes from the support surface the glass particles formed as a result of grinding.

The apparatus according to the invention, as shown in Figs. 1a and 1b, thus comprises in its simplest form a robot (1), a rotatable abrasive disc 1a being connected therewith by a supporting arm 1b and grinding the edge of the piece 3, fixed in a stationary manner at the distance e from the support surface 2, when moving along the edge. Figures 1a and 1b show a robot 1 fixed above the piece 3 to be treated, and Fig. 2 shows a robot fixed alternatively at the side of the piece 3.

The embodiments shown in Figs. 1a-4 largely represent a device suitable for edge grinding of a glass sheet, wherein the glass sheet 3 is placed for edge grinding onto a horizontal support surface 2 in the treatment center I. Thus the abrasive disc 1a revolves around a vertical axis of rotation, pressed against the edge of the glass sheet 3 to be treated.

In the embodiments shown in the figures, the grinding head is supported in an advantageous embodiment by means of a fluid bed 5a onto the support surface 2, wherein the force guiding the movement of the abrasive disc 1a on the support surface 2 is transmitted from the arm 1b of the robot 1 by means of a constant power arrangement 1e to the grinding head. In an advantageous embodiment, an underpressure arrangement 4a, such as one or several suction pads, is at least partly used in the treatment of the glass sheet 3. Thus the fixing arrangement 4 comprises preferably several supporting pieces 4a1, which can each be fixed at its first end A in a stationary manner preferably by means of the underpressure arrangement 4a, e.g. by the suction pad principle, to the glass sheet 3 and at its second end B to the support surface 2 by a mechanic, electronic and/or pressurized-medium driven system.

With particular reference to Figs. 3 and 4, each supporting piece 4a1 of the fixing arrangement 4 is arranged to be fixed both at its first end A and at its second end B by means of the underpressure arrangement 4a, wherein a suction pad is arranged at its both ends, the underpressure thereof being preferably achieved by an external flow arrangement, which particularly in the embodiment shown in Fig. 3 is carried out by suction hoses 4a2 connecting each support piece 4a1 to a suction fan 4a3. The above described arrangement has the advantage that the distance e between the lower surface of the glass sheet to be ground and the support surface 2 is constant, wherein variations in the thickness of the glass sheet to be treated can be taken into account in the adjustments of the grinding head. Thus also the suction pads 4a1 can be almost freely placed at the points required by the treatment of the glass sheet 3. For positioning the suction pads 4a1, the support surface 2 is preferably chequered, wherein the same square division is utilized preferably also in the data processing unit. Naturally, the number of suction pads needed depends on the size of the glass sheet to be treated.

In the embodiment shown in Fig. 4, the mass M of the grinding head of the robot 1 is compensated by a supporting force FM effected from the support surface 2 at the point of the grinding head, wherein the forces transmitted from the grinding head to the supporting arm 1b of the robot 1 can be minimized. Consequently between the supporting arm 1b and the grinding head, primarily only the grinding force f is effective, namely in the plane of the piece 3 to be ground and against the edge thereof, as shown in Fig. 1a. Thus particularly in the embodiments shown in Figs. 1a and 4, the electric motor 1d revolving the abrasive disc 1a and the abrasive disc 1a are formed as an integrated grinding head, which is connected to the supporting arm 1b of the machining device 1 by a substantially horizontal constant power arrangement 1e comprising a linear conduit 1e1 with a variable length and a pressurized air cylinder 1e2 effecting the grinding force f. The constant power arrangement 1e is intended for use as a flexible element, wherein it thus allows for small variations in the size of the glass sheet to be treated and inaccuracies of programming. Thus the grinding force f to be directed by the abrasive disc 1a can be adjusted simply by adjusting the pressure to be fed into the pressurized air cylinder 1e2.

In the apparatus according to the invention, the support surface 2 is preferably formed as a flat grinding table which is preferably ca. 300 mm larger at its edges than the largest glass sheet to be treated. Thus upon manufacturing regular windscreens, the size of the grinding table is ca. 3500 mm x 2700 mm. Further, the electric motor of the abrasive disc 1a is preferably a squirrel-cage motor, wherein the speed of rotation of the abrasive disc 1a can be adjusted simply by means of a frequency transformer. The attachment of the abrasive disc 1a to the axle of the motor is preferably carried out by means of a quick fixing arrangement. Naturally, the integrated grinding head formed by the electric motor 1d and the abrasive disc 1a can be adjusted in the vertical direction by a variety of arrangements.

It is obvious that the invention is not restricted to the embodiments presented above but it can be modified within the scope of the claims. Naturally, the abrasive disc can be driven, as distinct from that presented above, e.g. by pressurized air or by a motor in connection with the machining device, wherein the rotational movement generated thereby is transmitted by a power transmission arrangement led through the supporting arm. Naturally, the above-mentioned construction is more complex than the presented embodiment and may induce unnecessary complexity and large dimensions. Naturally, the supporting pieces used for supporting the piece to be treated can be modified by a variety of arrangements, wherein in the simplest form it may be possible to use solely a compact, self-driven construction provided at its both ends with suction pads.

## Claims

1. Method of machining the edge of a substantially planar workpiece (3), such as a glass sheet, wherein in a machining centre (I) the machining of a workpiece, fixed by a fixing arrangement (4) in a stationary manner on a substantially horizontal support surface (2) at a predetermined distance (e) therefrom, is carried out by a tool head, fixed to at least one movable arm (1e) of a robot (1), and comprising a tool (1a) rotatably driven around a substantially vertical axis of rotation, the tool head being supported, in addition to the support by the robot arm (1e), substantially in the vertical downward direction, characterized by supporting the tool head on the workpiece support surface (2) by means of a fluid bearing arrangement (5) comprising a carrier fixed to the tool head and having a bearing surface (1c) for gliding on the workpiece support surface (2) by forming a fluid bed (5a) between the bearing surface (1c) of the carrier and the workpiece support surface.

2. Method according to claim 1, characterized by leading a grinding fluid (m), such as water and/or oil, at least into connection with the grinding fluid (m) being used as a carrier medium of the fluid bearing arrangement (5) supporting the tool (1a) on the workpiece support surface (2) and led for forming a fluid bed (5a) at least between the bearing surface (1c) and the support surface (2).

3. Method according to claim 1, characterized in that from the robot (1) a force, substantially effecting the movement of the tool (1a) in relation to the workpiece support surface (2), is transmitted preferably by means of a constant power arrangement (1e) into the tool (1a).

4. Method according to any of claims 1 to 3, characterized in that the workpiece (3) to be machined is fixed on the workpiece support surface (2) by a fixing arrangement (4) comprising at least one, preferably several supporting pieces (4a1), each being, at least for the time of the machining phase, fixed at its first end (A) in a stationary manner by means of an underpressure arrangement (4a), such as one or several suction pads, to the workpiece (3) to be machined, and at its second end (B) to the workpiece support surface (2) by a drive system, such as a mechanically or electrically driven system, or a system driven by means of a pressurized medium.

5. Apparatus for machining the edge of a substantially planar workpiece (3), such as a glass sheet, comprising a robot (1) having a movable arm (1e), a tool head fixed to the movable arm, and a tool mounted to the tool head for rotation about a substantially vertical axis, a substantially horizontal workpiece support surface (2), a fixing arrangement (4) for fixing the workpiece at a predetermined distance (e) above the workpiece support surface (2) in a stationary manner, and means for supporting the tool head, in addition to the support by the robot arm (1e), substantially in the vertical downward direction, characterized in that the means for additionally supporting the tool head comprise a fluid bearing arrangement (5) for supporting the tool head on the workpiece support surface (2), the arrangement comprising a carrier fixed to the tool head and having a bearing surface (1c) for gliding on the workpiece support surface (2) by forming a fluid bed between the bearing surface (1c) of the carrier and the workpiece support surface (2).

6. Apparatus according to claim 5, characterized in that the robot (1) is provided with a constant power arrangement (1e), arranged to generate the force required for the movement of the tool (1a) in relation to the workpiece support surface (2).

7. Apparatus according to claim 5 or 6, characterized in that the fixing arrangement (4) comprises at least one, preferably several support pieces (4a1), each being arranged to attach at least for the time of the machining phase in a stationary manner at its first end (A), by an underpressure arrangement (4a), such as one or several suction pads, to the workpiece (3) to be machined and at its second end (B) by a drive system, such as a mechanically or an electrically driven system or a system driven by means of a pressurized-medium, to the workpiece support surface (2).

8. Apparatus according to claim 7, characterized in that the support piece (4a1) of the fixing arrangement (4) is arranged to be fixed both at its first end (A) and at its second end (B) by the underpressure arrangement (4a), wherein each end is provided with a gripping means functioning by the suction pad principle, the undepressure thereof being arranged preferably by an external flow arrangement, such as a suction hose (4a2), connection the support piece (4a1) to a suction fan (4a3).

9. Apparatus according to any of the claims 6 to 8, characterized in that by revolving the tool (1a), the power means, such as an electric motor (1d), and the tool (1a), such as an abrasive disc, are formed as an integrated grinding head which is connected with the supporting arm (1b) of the robot (1) by a substantially horizontal constant power arrangement (1e4) comprising an element of a preferably varying length, such as a linear conduit (1e1), and a power means, such as a pressurized air cylinder (1e2), generating the grinding force (f) directed against the edge of the workpiece to be machined.

## Patentansprüche

1. Verfahren zur Bearbeitung der Kante eines im wesentlichen ebenen Werkstückes (3), wie eine Glasplatte, worin in einem Bearbeitungszentrum (I) die Bearbeitung eines Werkstückes, welches durch eine Fixierungsanordnung (4) auf eine im wesentlichen horizontale Unterstützungsoberfläche (2) in einem vorbestimmten Abstand (E) davon auf eine stationäre Weise fixiert ist, durch einen Werkzeugkopf durchgeführt wird, welcher an mindestens einem bewegbaren Arm (1e) eines Roboters (1) befestigt ist, und ein Werkzeug (1a), welches rotierbar um eine im wesentlichen vertikale Drechachse angetrieben wird, umfaßt, wobei der Werkzeugkopf zusätzlich zu der Unterstützung durch den Roboterarm (1e) im wesentlichen in die vertikale Abwärtsrichtung unterstützt wird, gekennzeichnet durch das Unterstützen des Werkzeugkopfes auf der Werkstück-Unterstüzungsoberfläche (2) mit Hilfe einer Flüssigkeits-Lageranordnung (5), welche einen Träger, der an dem Werkzeugkopf befestigt ist, umfaßt und der eine Lagerfläche (1c) zum Gleiten auf der Werkstück-Unterstützungsoberfläche (2) durch Bilden eines Flüssigkeitsbettes (5a) zwischen der Auflagefläche (1c) des Trägers und der Werkstück-Unterstützungsoberfläche aufweist.

2. Verfahren nach Anspruch 1, gekennzeichnet durch das Führen einer Schleifflüssigkeit (m), wie Wasser und/oder Öl, zumindest in Verbindung mit der Schleifflüssigkeit (m), die als ein Trägermedium der Flüssigkeits-Lageranordnung (5), die das Werkzeug (1a) auf der Werkstück-Unterstützungsoberfläche (2) trägt, benutzt wird, und die zum Bilden eines Flüssigkeitsbettes (5a) zumindest zwischen der Auflagefläche (1c) und der Unterstützungsoberfläche (2) geführt wird.

3. Verfahren nach Anspruch 1, dadurch gekennzeichnet, daß von dem Roboter (1) eine Kraft, die im wesentlichen die Bewegung des Werkzeuges (1a) mit Bezug auf die Werkstück-Unterstützungsoberfläche (2) bewirkt, vorzugsweise mit Hilfe einer konstanten Kraftanordnung (1e) in das Werkzeug (1a) übertragen wird.

4. Verfahren nach jedem der Ansprüche 1 bis 3, gekennzeichnet dadurch, daß das zu bearbeitende Werkstück (3), auf der Werkstück-Unterstützungsoberfläche (2) durch eine Fixierungsanordnung (4) fixiert wird, welche zumindest eines, vorzugsweise einige Unterstützungsstücke (4a1) umfaßt, wovon jedes zumindest zur Zeit der Bearbeitungsphase mit seinem ersten Ende (A) auf eine stationäre Weise mit Hilfe einer Unterdruck-Anordnung (4a), wie eines oder mehrere Saugkissen, an dem zu bearbeitenden Werkstück (3) fixiert ist und mit seinem zweiten Ende (B) an der Werkstück-Unterstützungoberfläche (2) durch ein Antriebssystem, wie ein mechanisches oder elektrisches Antriebssystem oder ein System, welches mit Hilfe eines Mediums, das unter einem Innendruck steht, angetrieben wird, fixiert ist.

5. Vorrichtung zur Bearbeitung der Kante eines im wesentlichen ebenen Werkstückes (3), wie eine Glasplatte, mit einem Roboter (1), der einen bewegbaren Arm (1e), einen Werkzeugkopf, der an dem bewegbaren Arm fixiert ist, und ein Werkzeug, welches an dem Werkzeugkopf zur Rotation um eine im wesentlichen vertikale Achse montiert ist, aufweißt, einer im wesentlichen horizontalen Werkstück-Unterstützungsoberfläche (2), einer Fixierungsanordnung (4) zum Fixieren des Werkstückes in einer vorbestimmten Entfernung (E) über der Werkstück-Unterstützungsoberfläche (3) auf eine stationäre Weise und Einrichtungen zum Unterstützen des Werkzeugkopfes zusätzlich zu dem Unterstützen durch den Roboterarm (1e), im wesentlichen in der vertikalen Abwärtsrichtung, dadurch gekennzeichnet, daß die Einrichtung zur zusätzlichen Unterstützung des Werkzeugkopfes eine Flüssigkeit-Lageranordnung (5) zum Unterstützen des Werkzeugkopfes auf der Werkstück-Unterstützungsoberfläche (2) umfaßt, wobei die Anordnung einen Träger aufweißt, der an dem Werkzeugkopf fixiert ist, und eine Auflagefläche (1c) zum Gleiten auf der Werkstück-Unterstützungsoberfläche (2) durch Bilden eines Flüssigkeitsbettes zwischen der Auflageoberfläche (1c) des Trägers und der Werkstück-Unterstützungsoberfläche (2) besitzt.

6. Vorrichtung nach Anspruch 5, dadurch gekennzeichnet, daß der Roboter (1) mit einer konstanten Kraftanordnung (1e) ausgestattet ist, die angeordnet ist, um die Kraft, welche zur Bewegung des Werkzeuges (1a) erforderlich ist, mit Bezug auf die Werkstück-Unterstützungsoberfläche (2) zu erzeugen.

7. Vorrichtung nach Anspruch 5 oder 6, dadurch gekennzeichnet, daß die Fixierungsanordnung (4) zumindest eines, vorzugsweise jedoch mehrere Unterstützungsstücke (4a1) umfaßt, wovon jedes angeordnet ist, um sich zumindest zur Zeit der Bearbeitungsphase auf eine stationäre Weise mit seinem ersten Ende (A) durch eine Unterdruck Anordnung (4a), wie ein oder mehrere Saugkissen, mit dem Werkstück (3), welches zu bearbeiten ist, zu verbinden und sich mit seinem zweiten Ende (B) durch ein Antriebssystem, wie ein mechanisches oder ein elektrisches Antriebssystem oder ein System, welches mit Hilfe eines Mediums, das unter Innendruck ist, angetrieben wird, mit der Werkstück-Unterstützungsoberfläche (2) zu verbinden.

8. Vorrichtung nach Anspruch 7, dadurch gekennzeichnet, daß das Unterstützungsstück (4a1) von der Fixierungsanordnung (4) angeordnet ist, um sowohl an seinem ersten Ende (A) als auch an seinem zweiten Ende (B) durch die Anordnung (4a), die unter Druck ist, fixiert zu werden, worin jedes Ende mit einer Einspanneinrichtung ausgestattet ist, die durch das Saugkissen-Prinzip funktioniert, wobei der Unterdruck derjenigen vorzugsweise durch eine externe Fließanordnung,
wie einen Saugschlauch (4a2), die die Verbindung des Unterstützungsstückes (4a1) mit einem Saugventilator (4a3) schafft, angeordnet ist.

9. Vorrichtung nach einem der Ansprüche 6 bis 8, gekennzeichnet dadurch, daß durch das Sich-Drehen des Werkzeuges (1a) die Krafteinrichtung, wie ein elektrischer Motor (1d), und das Werkzeug (1a), wie eine Schleifscheibe, als ein integrierter Schleifkopf gebildet werden, welcher mit dem Unterstützungsarm (1b) des Roboters (1) durch eine im wesentlichen horizontale konstante Kraftanordnung (1e4) verbunden ist, die ein Element einer vorzugsweise variierenden Länge, wie eine lineare Leitung (1e1), umfaßt, und eine Leistungseinrichtung, wie einen unter Innendruck stehenden Luftzylinder (1e2), umfaßt, wobei die Schleifkraft (f), die gegen die Kante des zu bearbeitenden Werkstückes, gerichtet ist, erzeugt wird.

## Revendications

1. Méthode d'usinage du rebord d'une pièce à oeuvrer sensiblement plane (3), telle qu'une feuille de verre, selon laquelle, dans un centre d'usinage I, l'usinage d'une pièce, fixée par un dispositif de fixation (4) d'une manière permanente sur une surface de support sensiblement horizontale (2) à une distance prédéterminée (e) de celle-ci, est effectué par une tête d'outil, fixée à au moins un bras mobile (1e) d'un robot (1), et comprenant un outil (1a) entraîné en rotation autour d'un axe de rotation sensiblement vertical, la tête d'outil étant soutenue, en sus du support par le bras (1e) du robot, sensiblement selon la direction verticale descendante,
caractérisée en ce que la tête d'outil est soutenue sur la surface de support (2) pour la pièce à oeuvrer au moyen d'un dispositif de sustentation par fluide (5) comprenant un organe porteur fixé à la tête d'outil et présentant une surface de sustentation (1c) destinée à glisser sur la surface de support (2) pour la pièce à oeuvrer par formation d'un lit fluidisé (5a) entre la surface de sustentation (1c) de l'organe porteur et la surface de support pour la pièce à oeuvrer.

2. Méthode selon la revendication 1, caractérisée par l'amenée d'un fluide de meulage (m), tel que de l'eau et/ou de l'huile, au moins en combinaison avec l'utilisation du fluide de meulage (m) comme milieu de transport du dispositif de sustentation par fluide (5) soutenant l'outil (1a) sur la surface de support (2) pour la pièce à oeuvrer et amené pour former un lit fluidisé (5a) au moins entre la surface de sustentation (1c) et la surface de support (2).

3. Méthode selon la revendication 1, caractérisée en ce que, à partir du robot (1), une force provoquant substantiellement le mouvement de l'outil (1a) par rapport à la surface de support (2) pour la pièce à oeuvrer est transmise de préférence au moyen d'un dispositif à puissance constante (1e) jusqu'à l'outil (1a).

4. Méthode selon l'une quelconque des revendications 1 à 3, caractérisée en ce que la pièce (3) à usiner est fixée sur la surface de support (2) pour la pièce à oeuvrer par un dispositif de fixation (4) comprenant au moins une, de préférence plusieurs pièces de support (4a1), chacune étant, au moins pour la durée de la phase d'usinage, fixée à sa première extrémité (A), d'une manière stationnaire au moyen d'un dispositif à dépression (4a) tel qu'un ou plusieurs coussins à succion, à la pièce (3) à usiner, et à sa seconde extrémité (B) à la surface de support (2) pour la pièce à oeuvrer par un système d'actionnement, tel qu'un système actionné mécaniquement ou électriquement, ou un système actionné au moyen d'un milieu sous pression.

5. Appareil pour usiner le rebord d'une pièce à oeuvrer (3) sensiblement plane, telle qu'une feuille de verre, comprenant un robot (1) ayant un bras mobile (1e), une tête d'outil fixée au bras mobile, et un outil monté sur la tête d'outil pour être entraîné en rotation autour d'un axe sensiblement vertical, une surface de support (2) sensiblement horizontale pour la pièce à oeuvrer, un dispositif de fixation (4) pour fixer la pièce à oeuvrer à une distance (e) prédéterminée au-dessus de la surface de support (2) pour la pièce à oeuvrer d'une manière stationnaire, et un moyen pour soutenir la tête d'outil, additionnellement au support par le bras (1e) du robot, sensiblement selon la direction verticale descendante, caractérisé en ce que le moyen pour soutenir additionnellement la tête d'outil comprend un dispositif à sustentation par fluide (5) pour soutenir la tête d'outil sur la surface de support (2) pour la pièce à oeuvrer, le dispositif comportant un organe porteur fixé à la tête d'outil et ayant une surface de sustentation (1c) destinée à glisser sur la surface de support (2) pour la pièce à oeuvrer par formation d'un lit fluidisé entre la surface de sustentation (1c) de l'organe porteur et la surface de support (2) pour la pièce à oeuvrer.

6. Appareil selon la revendication 5, caractérisé en ce que le robot (1) est muni d'un dispositif à puissance constante (1e), conçu pour produire la force nécessaire au mouvement de l'outil (1a) par rapport à la surface de support (2) pour la pièce à oeuvrer.

7. Appareil selon la revendication 5 ou 6, caractérisé en ce que le dispositif de fixation (4) comprend au moins une, de préférence plusieurs pièces de support (4a1), chacune étant disposée pour se fixer, au moins pendant la durée de la phase d'usinage et d'une manière stationnaire, par sa première extrémité (A), à l'aide d'un dispositif à dépression (4a), tel qu'un ou plusieurs coussins à succion, à la pièce (3) à usiner, et par sa seconde extrémité (B), à l'aide d'un système d'actionnement, tel qu'un système actionné mécaniquement ou électriquement ou un système actionné au moyen d'un milieu sous pression, à la surface de support (2) pour la pièce à oeuvrer.

8. Appareil selon la revendication 7, caractérisé en ce que la pièce de support (4a1) du dispositif de fixation (4) est disposée pour être fixée à la fois à sa première extrémité (A) et à sa seconde extrémité (B) par un dispositif à dépression (4a), chacune des extrémités étant munie d'un moyen de préhension fonctionnant selon le principe du coussin à succion, dont la dépression est assurée de préférence par un appareil à écoulement situé extérieurement, tel qu'un tube de succion reliant la pièce de support (4a1) à un ventilateur de succion (4a3).

9. Appareil selon l'une quelconque des revendications 6 à 8, caractérisé en ce que, pour entraîner en rotation l'outil (1a), la source de puissance, telle qu'un moteur électrique (1d), et l'outil (1a), tel qu'un disque abrasif, sont formés comme tête de meulage intégrée qui est reliée au bras de support (1b) du robot (1) par un dispositif (1e4) sensiblement horizontal et à puissance constante, comprenant un élément de longueur de préférence variable, tel qu'un conduit linéaire (1e1) et une source de puissance, telle qu'un cylindre (1e2) à air sous pression, produisant la force de meulage (f) dirigée contre le rebord de la pièce à meuler.
